# EUROPEAN PATENT APPLICATION

(11) **EP 2 143 974 A1**
(43) Date of publication of application: **13.01.2010**
(21) Application number: 08160250.0
(22) Date of filing: 11.07.2008
(51) Int. Cl.: F16H 25/24, A61G 7/10, A61G 7/00

(54) **Linear actuator, device for supporting a person, method for strengthening a linear actuator and safety element**

(71) Applicant: GymnalUniphy, 3740 Biltzen (BE)
(72) Inventor: Wijnmaalen, Piet, B-3001 Heverlee (BE)
(74) Representative: Luys, Marie-José A.H.

(57) **Abstract**

Linear actuator (10) having a variable length along a longitudinal axis, the linear actuator (10) comprising an assembly of a first (8) and a second (9) element respectively having a first and second longitudinal axis extending along the longitudinal axis of the linear actuator (10), the first element (8) being moveably connected to the second element (9) along the longitudinal axis towards an end portion of the second element (9) for providing the linear actuator with a variable length, wherein the linear actuator (10) comprises a safety element (1) mounted to the assembly and extending along at least part of the first (8) and second (9) element when the first element (8) is at the end portion (12) of the second element (9) for avoiding breaking of the linear actuator (10) by keeping the first and second longitudinal axis extending along the longitudinal axis of the linear actuator (10).

## Description

The present invention relates to a linear actuator according to the preamble of the first claim.

The present invention also relates to a device for supporting a person, a method for strengthening a linear actuator and a safety element.

The use of linear actuators is well known to the person skilled in the art. The known linear actuators have a variable length along a longitudinal axis and are for example used to lift substantial weights. The known linear actuators comprise a first and a second element. The first element comprises a first longitudinal axis and the second element comprises a second longitudinal axis. The first and second longitudinal axes extend along the longitudinal axis of the linear actuator. The first element is moveably connected to and along the second element for providing the longitudinal actuator with a variable length. The second element for example is a screw which is rotatably driven by a motor. The first element is screwed on the second element and mounted to the linear actuator such that rotation of the first element with respect to the second element, when the second element is driven by the motor, is prevented. This way, when the second element rotates, the first element translates along the longitudinal axis of the second element, i.e. the length direction of the screw. The rotational movement of the motor, in other words, is converted into a translational movement of the first element of the linear actuator.

It is however a problem of such linear actuators that when the first element reaches an end portion of the second element and when the motor keeps rotating the second element, the first element translates off the second element with the result that the strength of the assembly of the first and second element is substantially reduced. Especially, it has been found that if the linear actuator is used to perform an upright motion when the first element translates off the second element, the first element is no longer connected to the second element which often causes the linear actuator to break in at least two parts: a first part with the first element and a second part with the second element.

There is thus a need for a linear actuator in which the strength of the assembly of the first and the second element is no longer substantially reduced when the first element translates off the second element.

Accordingly it is an aim of the current invention to provide a linear actuator in which the strength of the assembly of the first and the second element is no substantially longer reduced when the first element translates off the second element.

This is achieved according to the present invention with a device showing the technical features of the characterising portion of the first claim.

Thereto, the linear actuator comprises a safety element mounted to the assembly and extending along at least part of the first and second element when the first element is at the end portion of the second element for avoiding breaking of the linear actuator by keeping the first and second longitudinal axis extending along the longitudinal axis of the linear actuator.

By providing such a safety element the strength of the assembly of the first and second element is increased when the first element reaches the end part of the second element. Especially, when the first element translates off the second element, the safety element allows that the first longitudinal axis and the second longitudinal axis keep extending along the longitudinal axis of the linear actuator with for example as effect that the linear actuator does no longer break into two parts when it is used to perform an upright motion. The safety element in other words keeps the two elements connected which avoids breaking of the linear actuator.

It is already known to provide the end part of the second element with an electronic sensor which stops the rotation of the second element when the first element reaches the end part of the second element. This way it can be avoided that the first element is rotated off the second element. Although such a sensor electronically avoids breakage of the linear actuator it does not mechanically avoids breaking of the linear actuator. As a consequence, when the sensor malfunctions it does no longer prevent that the first element translates off the second element such that the linear actuator still is prone to malfunctioning.

The safety element according to the invention however mechanically avoids breaking of the linear actuator and therefore is less prone to malfunctioning.

According to a preferred embodiment of the linear actuator according to the invention the safety element has a cylindrical shape and the safety element comprises at least one cutting line extending along an axial direction of the safety element, the safety element being provided to be opened along the cutting line over a distance being such that the safety element can radially receive at least part of the assembly when mounting the safety element to the assembly. Such a safety element can be mounted to the linear actuator without having to dismount the linear actuator in order to be able to mount the safety element to the linear actuator.

More preferably, the safety element comprises a first and a second cutting line delimiting at least a first and a second part of the safety element, the first and the second part being provided to be fastened to each other at least partly around the assembly.

Such a safety element has been found to be even more easily mountable to the assembly.

In another preferred embodiment of the linear actuator according to the invention, the safety element comprises fixing means for at least partly fixing the position of the safety element along the longitudinal axis of the linear actuator.

The inventor has found that such fixing means allow a better positioning of the safety element along the first and second element such that the reliability of the increased strength is increased.

The current invention also relates to a device for supporting a person at a supporting height, provided with a linear actuator according to the invention for changing the supporting height.

Devices having a supporting height which can be adapted by use of a linear actuator are already known to the person skilled in the art. However, the beds were provided with linear actuators which had an increased risk of breaking in two, as described above. When such a linear actuator breaks in two, the height of the lying surface suddenly drops dramatically since the lying surface is supported by the linear actuator. A person at that moment occupying the lying surface falls down a considerable distance which is not desirable at all and will possibly result in serious harm to the person occupying the lying surface and/or persons, such as for example (para)medical personnel, standing in the vicinity of the

Since the linear actuator according to the invention avoids breakage of the linear actuator, even after the first element is rotated off the second element, the linear actuator remains to support the lying surface. The height of the lying surface at that moment does not drop dramatically but instead remains substantially constant. The person occupying the lying surface therefore does not suddenly drops down.

The current invention also relates to a method for strengthening a linear actuator having a variable length along a longitudinal axis, the linear actuator comprising a first and a second element respectively having a first and second longitudinal axis extending along the longitudinal axis of the linear actuator, the first element being moveably connected to the second element along the longitudinal axis towards an end portion of the second element for providing the linear actuator with a variable length, **characterized in that** the linear actuator comprises a safety element mounted to the first and second element and extending along at least part of the first and second element when the first element is at the end portion of the second element for avoiding breaking of the linear actuator by keeping the first and second longitudinal axis extending along the longitudinal axis of the linear actuator.

This method aims at providing a way for providing a known linear actuator with a safety element as described above such that the linear actuator provided with the safety element no longer presents the problem of the known linear actuators as described above.

In a preferred embodiment, the safety element has a cylindrical shape and the safety element comprises at least one cutting line extending along an axial direction of the safety element, the safety element being mounted to the assembly by opening the cutting line over a distance until the safety element surrounds the assembly.

By such a mounting of the safety element to the linear actuator, it has been found that the safety element can be directly mounted to the linear actuator without having to, for example, dismount the linear actuator from its working position.

The invention also relates to a safety element as described above.

Other details and advantages of the device according to the invention will become apparent from the enclosed figures and description of preferred embodiments of the invention.
Figure 1 shows a view in perspective of an embodiment of the safety element according to the invention.
Figure 2 shows a top view of the safety element shown in figure 1.
Figure 3 shows a side view of the safety element shown in figure 1.
Figure 4 shows a frontal view of the safety element shown in figure 1.
Figure 5 shows a back view of the safety element shown in figure 1.
Figure 6 shows a cross section of the safety element shown in figure 2 along the lines VI - VI of figure 2.
Figure 7 shows a linear actuator provided with the safety element according to figure 1, with part of the safety element broken away.

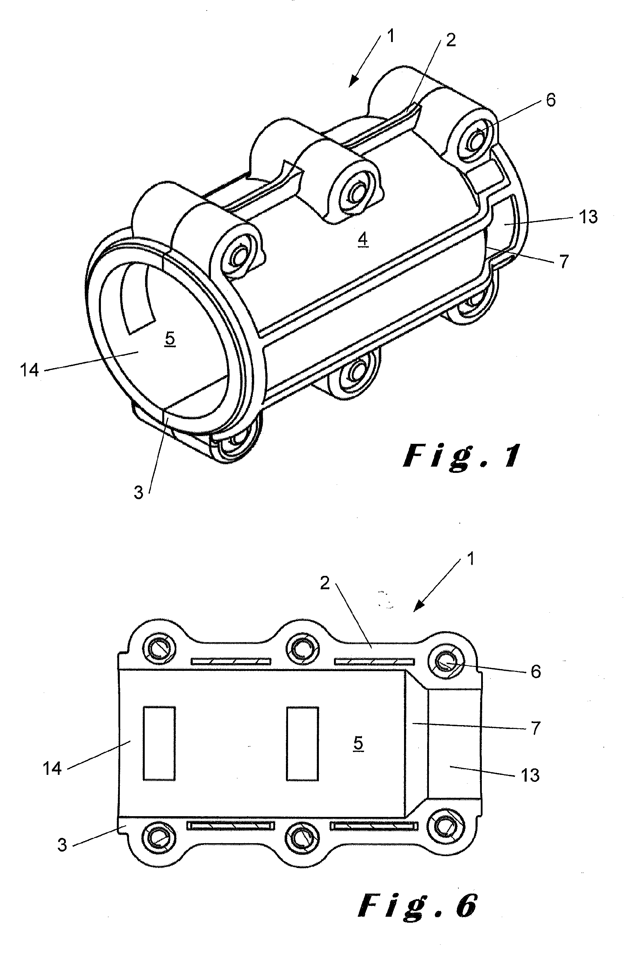

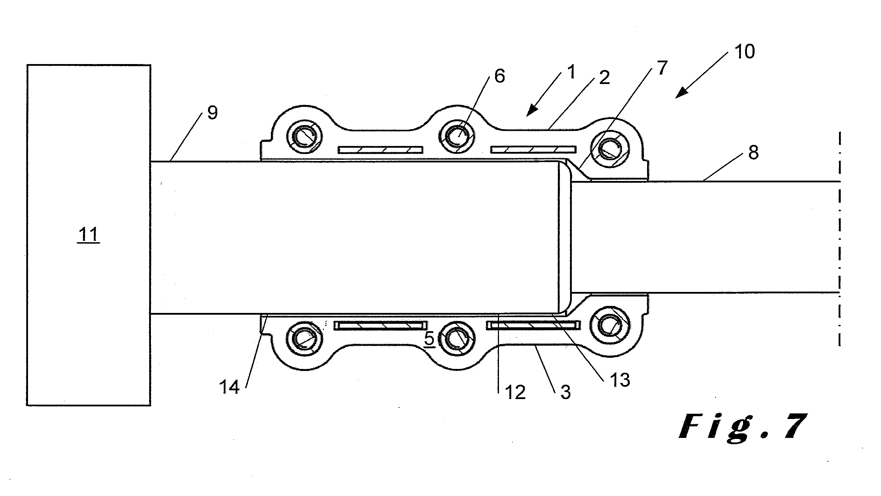

Figure 1 shows a safety element 1 according to the invention. The safety element 1 is provided to be mounted to a linear actuator 10, as shown in figure 7. The linear actuator 10 shown in figure 7 has a variable length and comprises an assembly of a first 8 and a second 9 element respectively. The first element 8 has a first longitudinal axis and the second element 9 has a second longitudinal axis. The first and second longitudinal axis extend along the longitudinal direction of the linear actuator 10. The first element 8 is moveably connected to and along the second element 9 for providing the linear actuator 10 with a variable length.

The first element 8 and the second element 9 may mutually engage each other by screwing means for example to form a worm-gearing. This is however not critical to the invention and any other means which allow a translation of the first element 8 with respect to the second element are possible. The second element 9 in such an embodiment for example is rotationally driven. Rotation of the first element 8 together with the second element 9 in that embodiment for example is avoided such that the first element 8 translates along the second element 9 when rotating the second element 9. Other embodiments are however possible.

The linear actuator 10 is for example provided with a motor 11 for driving the second element 9. In the embodiment where the second element 9 is a screw, the motor 11 is provided to rotate the second element 9 such that the first element 8 translates along the second element 9 when driving the motor 11.

As can be seen in figure 7, the safety element 1 is mounted to the assembly of the first 8 and second 9 element such that the safety element 1 extends along at least part of the first 8 and second 9 element when the first element 8 is at the end portion 12 of the second element 9 such that the first 8 and second 9 element keep extending along the longitudinal axis of the linear actuator 10.

The safety element 1 is provided to provide the linear actuator 10 with sufficient strength such that when the first element 8 translates off the second element 9, the first and second longitudinal axes keep extending along the longitudinal axis of the linear actuator such that breaking of the linear actuator is avoided. The different physical properties of the safety element 1 such as dimensions (for example length of the safety element 1 along the longitudinal direction of the linear actuator 10, length of a first part 13 of the safety element 1 running along the first element 8, length of a second part 14 of the safety element 1 running along the second element 9, thickness of the safety element 1, diameter of the safety element 1, etc.), form, material, etc. are preferably chosen to provide the safety element 1 with a desired strength also taking the physical properties of the first 8 and second 9 element such as dimensions, form, material, etc. into account.

The material of the safety element 1 preferably is a polymer. However any other material such as metal, wood, glass, etc. is possible. The polymer preferably is polyamide but can be any other polymer deemed appropriate by the person skilled in the art. More preferably, the polymer is polyamide 6.

The polymer preferably is reinforced with fibers. Although any fiber known to the person skilled in the art can be used to reinforced the polymer material of the safety element 1, the fibers preferably are glass fibers.

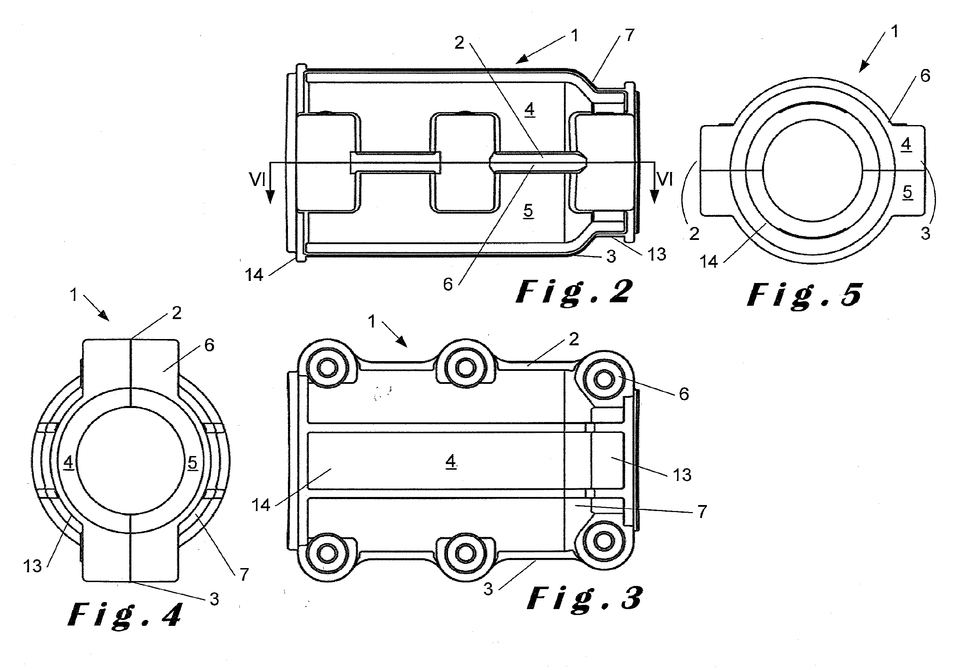

The inner dimensions and form of the safety element 1 preferably are chosen so that they closely, preferably tightly fit to the first 8 and second 9 element, more preferably are complementary to the outer form and dimensions of the first 8 and second 9 element. The outer dimensions and form of the safety element 1 are not critical for the invention and can be determined by the person skilled in the art. As shown in figures 1 - 6, the form of the safety element 1 can be cylindrical.

Preferably, the safety element 1 substantially surrounds the circumference of the first 8 and the second 9 element, as shown in figure 7. This is however not critical for the invention and the safety element 1 can also only partly surround the first 8 and the second 9 element.

The safety element 1 preferably comprises a cutting line 2, shown in figures 1 - 6, extending along an axial direction of the safety element 1. More preferably, the safety element 1 is provided to be opened along the cutting line 2 over a distance being such that the safety element 1 can radially receive at least part of the assembly when mounting the safety element to the assembly. Such a cutting line 2 allows a more easy mounting of the safety element 1 to the linear actuator 10. Such a cutting line 2 also allows the safety element 1 to be more easily removed from the linear actuator 10.

More preferably, to further increase the ease of installing the safety element 1, the safety element 1 comprises a first 2 and a second 3 cutting line delimiting at least a first 4 and a second 5 part of the safety element 1, the first 4 and the second 5 part being provided to be fastened to each other at least partly around the assembly as shown in the figures 1 - 6.

Although the safety element 1 shown in figures 1 - 6 only comprises a first 2 and a second 3 cutting line, the safety element 1 can also be provided with more than two cutting lines. The safety element 1 in such a case comprises more than two parts. The safety element 1 can for example comprise three, four five six, seven, eight, etc. cutting lines and respectively for example three, four, five, six, seven, eight, etc. parts. This is however not critical for the invention and can be determined by the person skilled in the art.

Although the cutting lines 2, 3 are symmetrically positioned around the longitudinal axis of the safety element 1, such that they are positioned along radially opposing sides of the safety element 1, this is not critical for the invention and can be further determined by the person skilled in the art.

Preferably, the safety element 1 comprises fastening means 6 for releasably fastening the first 4 and the second 5 part to each other, as shown in figures 1 - 6.

The fastening means 6 shown in figures 1 - 6 for example are positioned at the cutting lines 2, 3. The shown fastening means 6 are for example a nut and a bolt which together clamp the two parts 4 and 5 together. This is however not critical for the invention and the fastening means can be any means known to the person skilled in the art which are suited to keep the cutting line 2 closed.

The safety element 1 preferably comprises fixing means 7 for at least partly fixing the position of the safety element 1 along the longitudinal axis of the linear actuator 10. The fixing means 7 shown in figures 1 - 6 for example are in the form of an adapted form of the inner surface of the safety element 1 which keeps the safety element 1 from displacing along the assembly of the first 8 and second 9 element. Other fixing means 7 are however possible. The fastening means 6 can for example be adapted to tighten the safety element 1 around the assembly such that the position of the safety element 1 is fixed.

The safety element 1 is mounted to the assembly such that it extends along at least part of the assembly along the longitudinal axis of the linear actuator when the first element is at the end portion of the second element for avoiding breaking of the linear actuator by keeping the first and second longitudinal axis extending along the longitudinal axis of the linear actuator.

The safety element 1 shown thereto preferably is opened along the cutting line 2 and subsequently opened and moved radially over the assembly to provide it to the assembly and until the safety element 1 surrounds the assembly. When more than one cutting line 2 is provided, as shown in figures 1 - 6, the two parts 4, 5 of the safety element 1 are positioned on the assembly and subsequently mounted to each other.

Although the safety element 1 preferably is already in the desired position with respect to the first 8 and the second 9 element after providing it to the assembly, the safety element 1 can subsequently be slid over the assembly into the desired position with respect to the first 8 and the second 9 element.

After the safety element 1 is in the desired position with respect to the first 8 and second 9 element, the fixing means 7 are used. In the embodiment of the safety element 1 according to the figures 1 - 6, the fixing means 7 are automatically used when the safety element 1 is put in the desired position.

The linear actuator according to the invention can for example be used in devices for supporting a person at a supporting height, provided with a linear actuator for changing the supporting height. The device can for example be, but is not limited to, a bed with a lying surface for supporting the person at the supporting height, a chair with a sitting surface for supporting the person at the supporting height, a patient hoist for hoisting the person to the supporting height and supporting the person at the supporting height. The linear actuator can of course also be used in any other embodiment deemed appropriate by the person skilled in the art.

## Claims

1. Linear actuator (10) having a variable length along a longitudinal axis, the linear actuator (10) comprising an assembly of a first (8) and a second (9) element respectively having a first and second longitudinal axis extending along the longitudinal axis of the linear actuator (10), the first element (8) being moveably connected to the second element (9) along the longitudinal axis towards an end portion of the second element (9) for providing the linear actuator with a variable length, **characterized in that** the linear actuator (10) comprises a safety element (1) mounted to the assembly and extending along at least part of the first (8) and second (9) element when the first element (8) is at the end portion (12) of the second element (9) for avoiding breaking of the linear actuator (10) by keeping the first and second longitudinal axis extending along the longitudinal axis of the linear actuator (10).

2. Linear actuator (10) as claimed in claim 1, **characterized in that** the safety element (1) has a cylindrical shape.

3. Linear actuator (10) as claimed in claim 2, **characterized in that** the safety element (1) comprises at least one cutting line (2) extending along an axial direction of the safety element (1), the safety element (1) being provided to be opened along the cutting line (2) over a distance being such that the safety element (1) can radially receive at least part of the assembly when mounting the safety element (1) to the assembly.

4. Linear actuator (10) as claimed in claim 3, **characterized in that** the safety element (1) comprises a first (2) and a second (3) cutting line delimiting at least a first (4) and a second (5) part of the safety element (1), the first (4) and the second (5) part being provided to be fastened to each other at least partly around the assembly.

5. Linear actuator (10) as claimed in claim 4, **characterized in that** the safety element (1) comprises fastening means (6) for releasably fastening the first (4) and the second (5) part to each other.

6. Linear actuator (10) according to any one of claims 4 or 5, **characterized in that** the two cutting lines (2, 3) are positioned along radially opposing sides of the safety element (1).

7. Linear actuator (10) according to any one of the preceding claims, **characterized in that** the safety element (1) comprises fixing means (7) for at least partly fixing the position of the safety element (1) along the longitudinal axis of the linear actuator (10).

8. Device for supporting a person at a supporting height, provided with a linear actuator (10) according to any one of the preceding claims for changing the supporting height.

9. Device according to claim 8, **characterized in that** the device comprises a bed with a lying surface for supporting the person at the supporting height.

10. Device according to claim 8 or 9, **characterized in that** the device comprises a chair with a sitting surface for supporting the person at the supporting height.

11. Device according to any one of claims 8 - 10, **characterized in that** the device comprises a patient hoist for hoisting the person to the supporting height and supporting the person at the supporting height.

12. Method for strengthening a linear actuator (10) having a variable length along a longitudinal axis, the linear actuator (10) comprising an assembly of a first (8) and a second (9) element respectively having a first and second longitudinal axis extending along the longitudinal axis of the linear actuator (10), the first element (8) being moveably connected to the second element (9) along the longitudinal axis towards an end portion of the second element (9) for providing the linear actuator (10) with a variable length, **characterized in** a safety element (1) is mounted to the assembly such that it extends along at least part of the assembly along the longitudinal axis of the linear actuator (10) when the first element (8) is at the end portion (12) of the second element (9) for avoiding breaking of the linear actuator (10) by keeping the first and second longitudinal axis extending along the longitudinal axis of the linear actuator (10).

13. Method for strengthening a linear actuator according to claim 12, **characterized in that** the safety element (1) has a cylindrical shape and the safety element (1) comprises at least one cutting line (3) extending along an axial direction of the safety element (1), the safety element (1) being mounted to the assembly by opening the cutting line (3) over a distance until the safety element (1) surrounds the assembly.

14. Safety element (1) according to any one of the preceding claims.
